# EUROPÄISCHE PATENTANMELDUNG

(11) **EP 3 378 956 A1**
(43) Veröffentlichungstag der Anmeldung: **26.09.2018**
(21) Anmeldenummer: 18162614.4
(22) Anmeldetag: 19.03.2018
(51) Int. Cl.: C14B 1/00, C14B 7/02, B60N 2/58, B60N 2/80

(54) **VERFAHREN UND VORRICHTUNG ZUR HERSTELLUNG EINER LEDERBEZOGENEN KOPFSTÜTZENSCHALE**

(30) Priorität: 20.03.2017 EP 17161896
(71) Anmelder: G. Taube Modellbau Cad Service GmbH, 67454 Haßloch (DE)
(72) Erfinder: SCHNABEL, Martin, 67146 Deidesheim (DE); TAUBE, Günther, 67454 Hassloch (DE)
(74) Vertreter: Strobel, Wolfgang

(57) **Zusammenfassung**

Die vorliegende Erfindung betrifft ein Verfahren zur Herstellung einer lederbezogenen Kopfstützenschale (11), welche aus einer Grundschale (12) gebildet wird, die einen Hohlraum mit einem umlaufenden Rand aufweist und die Grundschale (12) mit einem flächigen Bezug (13) aus Leder oder lederähnlichem Material bezogen wird, mit den folgenden Schritten:
- Verkleben des Bezugs (13) mit der Grundschale (12), dessen Zuschnitt derartig ausgebildet wird, dass er den Rand der Grundschale (12) um einen bestimmten Betrag übersteigt,
- Einlegen der Grundschale (12) mit Bezug (13) in eine Aufnahmeeinrichtung (3) einer Bearbeitungsstation (1),
- Aufdrücken einer Stempeleinrichtung (19) auf die Grundschale (12) mit Bezug (13), wobei die Stempeleinrichtung (19) einen Rahmen (17) mit einer innen umlaufenden gekrümmten Kontur (75) aufweist, wodurch bei Aufsetzen des Rahmens (17) auf den überstehenden Randabschnitt (15) des Bezugs dieser nach dem Inneren der Grundschale (12) gedrückt und umgebogen wird,
- anschließend durch Weiterbewegen der Stempeleinrichtung (19) Aufsetzen eines Stempels (23) auf den teils umgebogenen Randabschnitt (15) des Bezugs (13), wobei der Stempel (23) eine Außenkontur (26, 28) aufweist, die der Innenkontur des Randbereichs des Hohlraums der Grundschale (12) folgt, wobei der Stempel beheizbar ist, und Einfahren des Stempels (23) in den Hohlraum der Grundschale (12) unter vollständigem Umbiegen des Randabschnitts des Bezugs (13) in den Hohlraum und Andrücken des Randabschnitts gegen die Innenfläche des Randes der Grundschale (12), wodurch der Randabschnitt (15) mit der Innenseite des Randes der Grundschale (12) verklebt wird.

Weiterhin betrifft die vorliegende Erfindung eine Vorrichtung zum Ausführen des Verfahrens.

## Beschreibung

Die vorliegende Erfindung betrifft ein Verfahren zur Herstellung einer lederbezogenen Kopfstützenschale, welche aus einer Grundschale gebildet wird, die einen Hohlraum mit einem umlaufenden Rand aufweist und die Grundschale mit einem flächigen Bezug aus Leder oder lederähnlichem Material bezogen wird.

Unter Kopfstützenschale ist die Hauptkomponente einer Kopfstütze, welche insbesondere für den Einsatz in Kraftfahrzeugen dient, gemeint. Die Kopfstützenschale wird bedeckt von einem Deckelelement, das in der Regel als Auflageelement für die Person dient, die sich auf dem Sitz befindet, an dem die Kopfstütze angebracht ist. Zur Fixierung der Kopfstütze an dem Fahrzeugsitz ist eine Kopfstützen-Verbindungs- oder Halterungseinrichtung vorgesehen, die mindestens eine Verbindungsstange oder ein Verbindungspaneel, in der Regel zwei Verbindungsstangen aufweist, die gewöhnlich in dem Fahrzeugsitz derart gelagert sind, dass sie längs beweglich sind, sodass die Kopfstütze in ihrer Position bezüglich des zugehörigen Sitzes höhenverstellbar ist.

Der Basiskörper der Kopfstütze ist aus einer Grundschale, bevorzugt aus einem Spritzguss-Kunststoffteil, gebildet mit einer rückwärtigen, in der Regel bauchigen Fläche, einer oberen gegebenenfalls ebenfalls leicht gekrümmten Fläche, einer unteren, in der Regel ebenen Fläche und zwei Seitenflächen. Aufgrund der Schalenform gehen diese Flächen ohne erkennbare Kanten ineinander über.

Unter lederbezogen werden alle Materialien verstanden, die lederartig oder lederähnlich sind. Dazu gehören neben natürlichem bzw. echtem Leder auch Kunstleder und entsprechende Lederarten wie Nappaleder einschließlich Lederverbundmaterialien.

Aus dem Stand der Technik ist bekannt, dass in einer ersten Bearbeitungsstation die Außenoberfläche der Kopfstützenschale mit einem Lederbezug verklebt wird, wobei der Lederbezug an seiner Innenseite mit Klebstoff beschichtet ist, der unter Wärmeeinwirkung seine Klebewirkung entfaltet. Ausgangsmaterial des Lederbezugs ist ein flächiger Lederabschnitt, der entsprechend der Außenfläche der Kopfstützenschale zugeschnitten ist. Der Zuschnitt ist dabei so gewählt, dass er den Rand der Schale um einen bestimmten Betrag übersteigt. Dieser übersteigende Randstreifen kann beispielsweise 8 bis 10 mm betragen.

Das Aufbringen des Lederbezugs, im Folgenden "Bezug", auf die Grundschale erfolgt dadurch, dass ein geeigneter Kleber auf die Innenseite des Bezugs und/oder auf die Außenseite der Grundschale aufgetragen wird. Dies erfolgt durch Aufsprühen oder Bestreichen des Bezugs mittels einem Pinsel. Danach wird der Bezug auf die Grundschale kaschiert. Zum festen Verkleben des Bezugs mit der Grundschale werden Bezug und Grundschale anschließend unter gleichzeitigem Wärmeeintrag zur Aktivierung des Klebers gepresst. Bevorzugt ist die gesamte Innenfläche des Bezugs mit Klebstoff versehen.

Nachdem der Bezug aufgeklebt wurde, muss der überstehende Bezugsrand umgebogen werden und mit der Innenseite der Kopfstützenschale verklebt werden. Nachteilig beim Stand der Technik, von dem diese Erfindung ausgeht, ist, dass dieses Umbiegen manuell erfolgt, was nicht nur personal- und kostenintensiv ist, sondern auch qualitativ unterschiedliche Ergebnisse mit sich bringt. Nicht sauber gefertigte Kopfstützenschalen können somit in der Regel nicht weiterverarbeitet werden.

Der vorliegenden Erfindung liegt deshalb die Aufgabe zugrunde, ein Verfahren zur Herstellung einer lederbezogenen Kopfstützenschale vorzuschlagen, mit dem ein manueller Fertigungsprozess vermieden wird und ein qualitätsvolles, schnelles und im Wesentlichen automatisiertes Verfahren geschaffen wird.

Weiterhin liegt der vorliegenden Erfindung die Aufgabe zugrunde, eine entsprechende Vorrichtung zum zumindest teilweisen Herstellen einer lederbezogenen Kopfstützenschale vorzuschlagen, die das Umbiegen eines Randes des Bezugs der Kopfstützenschale umfasst.

Das erfindungsgemäße Verfahren zur Herstellung einer lederbezogenen Kopfstützenschale, welche aus einer Grundschale gebildet wird, die einen Hohlraum mit einem umlaufenden Rand aufweist und die Grundschale mit einem flächigen Bezug aus Leder oder lederähnlichem Material bezogen wird, weist die folgenden Schritte auf:
- Verkleben des Bezugs mit der Grundschale, dessen Zuschnitt derartig ausgebildet wird, dass er den Rand der Grundschale um einen bestimmten Betrag übersteigt,
- Einlegen der Grundschale mit Bezug in eine Aufnahmeeinrichtung einer Bearbeitungsstation,
- Aufdrücken einer Stempeleinrichtung auf die Grundschale mit Bezug, wobei die Stempeleinrichtung einen Rahmen mit einer innen umlaufenden gekrümmten Kontur aufweist, wodurch bei Aufsetzen des Rahmens auf den überstehenden Randabschnitt des Bezugs dieser nach dem Inneren der Grundschale gedrückt und umgebogen wird,
- anschließend, durch Weiterbewegen der Stempeleinrichtung, Aufsetzen eines Stempels auf den teils umgebogenen Randabschnitt des Bezugs, wobei der Stempel eine Außenkontur aufweist, die der Innenkontur des Randbereichs des Hohlraums der Grundschale folgt, wobei der Stempel beheizbar ist, und Einfahren des Stempels in den Hohlraum der Grundschale unter vollständigem Umbiegen des Randabschnitts des Bezugs in den Hohlraum und Andrücken des Randabschnitts gegen die Innenfläche des Randes der Grundschale, wodurch der Randabschnitt mit der Innenseite des Randes der Grundschale verklebt wird.

Durch dieses Verfahren wird vorteilhafterweise erreicht, dass das Umbiegen des Randes, im Gegensatz zum manuellen Umbiegen, über den gesamten Randumfang sowohl gleichmäßig als auch gleichzeitig erfolgt, was zu einem hochqualitativen, im Wesentlichen konstanten Herstellungsergebnis führt. Dies auch deshalb, weil die umzubiegende Fläche über ihre Gesamtheit mit im Wesentlichen gleicher Umbiegekraft und Andrückkraft an die Innenseite der Kopfstützenschale beaufschlagt wird, was bei einem manuellen Umbiegen nicht verwirklichbar ist.

Nach dem erfolgten Umbiegen des Randes des Bezugs und dessen Verkleben mit der Innenseite der Kopfstützenschale ist zwar der Herstellungsschritt des Beziehens der Kopfstützenschale mit einem Bezug beendet, es müssen jedoch noch weitere Bearbeitungsschritte an der Kopfstützenschale vorgenommen werden, bis diese als ein fertiges Teilelement einer Kopfstütze (noch ohne Inneneinrichtungen) angesehen werden kann.

Wie oben ausgeführt, muss die Kopfstütze an einem entsprechenden Sitz befestigbar und gegebenenfalls in ihrer Höhe verschiebbar sein. Als Verbindungs- oder Halteeinrichtung dienen herkömmlicherweise Stangen, beispielsweise aus Metall und verchromt, etc., die fest in der Kopfstütze gelagert werden und im zugehörigen Sitz fest oder gegebenenfalls längsbeweglich gelagert werden. Je nach Ausführungsform wird eine, in der Regel jedoch werden zwei solcher Stangen zur Lagerung der Kopfstütze verwendet. Da bestimmte Kopfstützen auch in ihrer Neigung verstellbar sein sollen, werden die Öffnungen in der Kopfstütze als Langlöcher ausgebildet. Ohne Neigungsverstellung reicht es aus, kreisförmige Öffnungen vorzusehen.

Da der auf die Grundschale aufgebrachte Bezug deren gesamte Außenfläche überdeckt, müssen für die Verbindungs- oder Halteeinrichtung der Kopfstütze im Bereich vorgesehener Öffnungen in der Kopfstützenschale entsprechende Öffnungen in den Bezug eingebracht werden. Vorteilhafterweise wird der Bezug im Bereich einer wenigstens einen Öffnung in der Grundschale, welche für die Aufnahme einer Kopfstützen-Verbindungs- oder Halterungseinrichtung der Kopfstützenschale mit dem zugehörigen Fahrzeugsitz dient, aufgeschlitzt. Durch das Aufschlitzen wird das Ziel erreicht, dass im Bereich der Öffnung zur Verfügung stehendes Bezugsmaterial verbleibt, das entsprechend umgebogen und mit der Innenseite der Kopfstützenschale verklebt werden kann. Dies führt zu einer entsprechend sauberen Verarbeitung und Ausgestaltung der wenigstens einen Öffnung in der Kopfstützenschale.

Gemäß dem erfindungsgemäßen Verfahren werden nach Einsetzen der bezogenen Grundschale in eine weitere Bearbeitungsvorrichtung zum Umbiegen des Randes der geschlitzten Öffnung die Grundschale fixiert und folgende Schritte durchgeführt:
- Einführen eines Stempels in die wenigstens eine Öffnung der Kopfstützen-Verbindungs- oder Halterungseinrichtung in der Grundschale unter gleichzeitigem Umbiegen der Randbereiche des geschlitzten Bezugsbereichs in das Innere der Grundschale,
- Aufsetzen eines der Kontur des Stempels angepassten hülsenförmigen Gegenhalteelements und Andrücken des Gegenhalteelements gegen die Innenseite der Grundplatte, wodurch der Rand der aufgeschlitzten Öffnung des Bezugs mit der Innenseite des Randbereichs der wenigstens einen Öffnung der Grundschale verklebt wird.

Damit ergibt sich eine hochwertige Verarbeitung beim Herstellen einer lederbezogenen Kopfstützenschale auch bezüglich der wenigstens einen Öffnung, in der Regel der zwei Öffnungen für die Haltestangen der Kopfstütze, wobei diese Öffnungen in der Regel als Längsöffnungen ausgestaltet sind, weil die Kopfstütze in der Regel verschwenkbar zur Anpassung an die jeweilige Person ausgestaltet ist.

Für Öffnungen in der Grundschale, die nicht länglich, sondern kreisrund sind, schlägt die vorliegende Erfindung folgende Verfahrensschritte mit großem Vorteil vor:
Nach dem Aufschlitzen des Bezugs durch ein entsprechendes Schneid- und Umbugwerkzeug wird durch weiteres Einführen des Schneid- und Umbugwerkzeugs in die wenigstens eine Öffnung ein Aufbiegen der Randbereiche des geschlitzten Bezugsbereichs erzeugt, wonach ein hülsenförmiges Gegendruckwerkzeug durch Bewegung in Gegenrichtung der Bewegung des Schneid- und Umbugwerkzeug auf den aufgebogenen Rand des aufgeschlitzten Bezugs drückt, dabei weiter umbiegt und ihn durch Andrücken gegen den Innenrandbereich der wenigstens einen Öffnung der Grundschale mit der Grundschale verklebt. Dieser Herstellungsschritt erfolgt in einer entsprechenden Lochrandumbug-Bearbeitungsvorrichtung bzw. -station, welche eine alternative Vorrichtung zur oben genannten Lochrandumbug-Bearbeitungsvorrichtung bzw. -station für längliche Öffnungen ist.

Vorteilhafterweise werden das hülsenförmige Gegenhalteelement der Bearbeitungsstation für längliche Öffnungen und/oder das hülsenförmige Gegendruckwerkzeug der Bearbeitungsstation für kreisförmige Öffnungen beheizt.

Hochwertige Lederbezüge für Kopfstützen weisen vielfach Ziernähte auf, die eine deutliche Verstärkung des Bezugsmaterials in ihrem Bereich bewirken. Dies führt zu Problemen, wenn sich diese Ziernähte im Bereich der vom Bezug ausgangs überdeckten Öffnungen liegen, weil diese Ziernähte dem Bezug in ihrem eine deutlich erhöhte Festigkeit und Widerstandskraft verleihen. Die vorliegende Erfindung schlägt deshalb ein wirksames Werkzeug vor, auch Bezugsbereiche mit Ziernähten einwandfrei aufzuschlitzen.

Vorteihafterweise wird deshalb zum Aufschlitzen des Bezugs in der wenigstens einen Öffnung für die Kopfstützen-Verbindungs- oder Halterungseinrichtung ein Schlitz- oder Messerwerkzeug verwendet, das einen Querschnitt in Form eines doppelten Y verwendet. Diese doppelte "Y"-Form ist derart dass sich die beiden vertikalen Äste der beiden Y treffen und die schrägen Äste der Y entgegengesetzt voneinander wegzeigen.

Alternativ, insbesondere bei kreisförmigen zu schlitzenden Öffnungen kann ein Schneid- und Umbugwerkzeug verwendet werden, das eine Mehrzahl von Schneidklingen aufweist, die radial bzw. sternförmig um eine Mittenachse angeordnet sind.

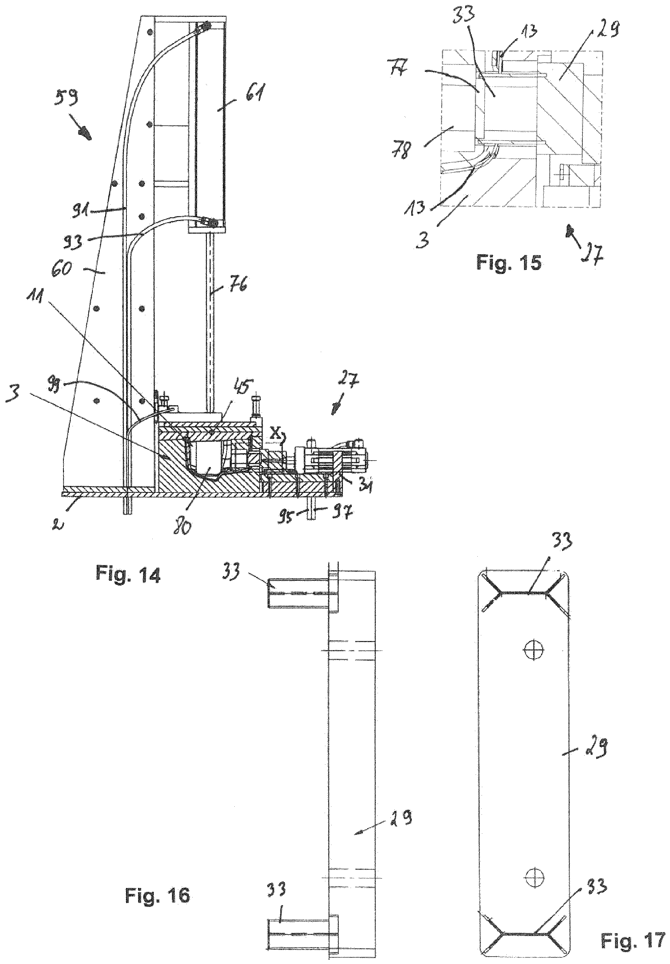

Durch die doppelte Y-Form bei länglichen Öffnungen bzw. Schlitzen ergibt sich vorteilhaft, dass der runde Endbereich einer jeden Öffnung in mehrere Teilabschnitte aufgeschlitzt wird und somit ein gutes Umbiegen ermöglicht und, wie aus Fig. 17 besonders ersichtlich, der Mittenabschnitt nur einen schlanken Schlitz erzeugt und der sich dadurch ergebende maximale Randabschnitt auf beide Seiten entsprechend umgebogen werden kann.

Vorteilhafterweise können am vorderen Rand des doppelten Y-Profils Zähne vorgesehen sein, wodurch die Schlitzkraft des Schlitzwerkzeugs insbesondere für das Schlitzen von Ziernähten weiter erhöht wird.

Gemäß der vorliegenden Erfindung ist weiter vorteilhaft, dass die beweglichen Elemente der Vorrichtung bzw. der einzelnen Bearbeitungsstationen pneumatisch angetrieben werden.

Darauf ist die Erfindung jedoch nicht beschränkt, sondern können auch alternative Antriebssysteme, wie beispielsweise elektrische oder hydraulische Antriebssysteme verwendet werden. Alternativ ist auch ein manueller Antrieb möglich.

Die erfindungsgemäße Vorrichtung zum zumindest teilweisen Herstellen einer lederbezogenen Kopfstützenschale, welche aus einer Grundschale gebildet wird, die einen Hohlraum mit einem umlaufenden Rand aufweist, umfassend das Umbiegen eines Randabschnitts des Bezugs der Kopfstützenschale weist auf:
- eine Bearbeitungsstation zum Umbiegen des Randabschnitts des Bezugs der Kopfstützenschale mit einer hohlen Aufnahmeeinrichtung zur Aufnahme der Grundschale, welche zumindest teilweise mit dem zu beziehenden Material verklebt ist,
- eine Lager- und Führungseinrichtung, an der eine Stempeleinrichtung längsbeweglich angeordnet ist, mit einer plattenförmigen Aufnahme, an der ein Stempel befestigt und ein Rahmen elastisch beweglich angehängt sind, wobei der Stempel eine zu dem Rahmen passende Außenkontur aufweist und bevorzugt beheizbar ist.

Mit der erfindungsgemäßen Vorrichtung kann somit ein hervorragendes Ergebnis des Umbiegens des Randes des Bezugs, wie auch oben bereits näher erläutert, erreicht werden.

Vorteilhafterweise weist der Rahmen eine Innenkontur auf, die gekrümmt ist und sich in Richtung der Aufnahme verjüngt. Dadurch wird beim Aufsetzen des Rahmen auf den überstehenden Rand des Bezugs dieser sukzessive von der zur Außenfläche der Grundschale parallelen Richtung in eine quer dazu verlaufende Richtung umgebogen, wobei dies vorteilhafterweise um im Wesentlichen bis zu 90° erfolgt. Wenn sich anschließend der Stempel in den Hohlraum der Grundschale hineinbewegt, kann er somit den halb umgebogenen Randabschnitt gut erfassen, weiter umbiegen, gegen die Innenseite der Grundschale drücken und mit dieser Verkleben.

Vorzugsweise erfolgt der Antrieb der Stempeleinrichtung pneumatisch, ist jedoch darauf nicht beschränkt. Ein elektrischer oder hydraulischer Antrieb ist alternativ von der Erfindung erfasst.

Weiterhin ist vorteilhaft, dass die erfindungsgemäße Vorrichtung eine Schlitzeinrichtung zum Aufschlitzen wenigstens einer Öffnung im Bezug der Grundschale aufweist, zur Bildung einer Öffnung für wenigstens eine Kopfstützen-Verbindungs- oder -Halterungs-einrichtung.

Dabei kann die Schlitzeinrichtung vorteilhafterweise ein Schlitzwerkzeug mit einem Querschnitt mit doppelter Y-Form oder als Schneidmesserwerkzeug mit sternförmig angeordneten Schneidklingen ausgebildet sein.

Weiterhin weist die erfindungsgemäße Vorrichtung einen Gegenhalter bzw. eine Gegenhaltereinrichtung auf, die vorzugsweise an der Stempeleinrichtung angebracht und in den Bereich des einzubringenden Schlitzes einbringbar ist und beim Schlitzvorgang ein Ausweichen des elastischen Bezugsmaterials im Wesentlichen verhindert, wobei die Gegenhaltereinrichtung eine Öffnung aufweist, die der Kontur des Schlitzwerkzeugs entspricht, so dass beim Durchdringen des Schlitzwerkzeugs durch den Bezug, dieses in die Gegenhaltereinrichtung eindringen bzw. eintauchen kann.

Moderne Fahrzeuge weisen immer mehr elektronisch und motorisch angetriebene Einrichtungen auf, die den Komfort erhöhen sollen. So kann eine moderne Kopfstütze auch eine Betätigungsvorrichtung zum Bedienen eines Verstellmotors, beispielsweise zur Höhenverstellung der Kopfstütze aufweisen. Entsprechend weist die Kopfstützenschale eine seitliche Öffnung auf, die zum Einbau einer Betätigungseinrichtung, beispielsweise eines Schalters, dient. Für diesen Schalter wird vorteilhafterweise eine freie Öffnung in der Kopfstützenschale vorgesehen, wobei der Schalter mit einer Blende umgeben ist, die sich auf den Rand des Bezugs setzt. Demzufolge ist ein Umbiegen des Öffnungsrandes des Bezugs nicht erwünscht, sondern soll der die Öffnung überdeckende Bezugsabschnitt wieder entfernt werden.

Vorteilhafterweise weist die erfindungsgemäße Vorrichtung eine Schneideinrichtung zum Einbringen wenigstens einer Öffnung in den Bezug einer Seitenwand der Grundschale durch eine entsprechende Öffnung der Aufnahme der Lochrandumbug-Bearbeitungsstation auf, wobei die Schneideinrichtung ein hülsenförmiges Stanzmesser aufweist, in dessen Hohlraum eine Mehrzahl von Fixierdornen angeordnet ist, die zur Fixierung des elastischen Bezugs während des Schneidvorgangs dienen, wobei sich die Fixierdorne zusammen mit dem Stanzmesser bewegen.

Vorteilhafterweise sind die Fixierdorne so ausgestaltet, dass sie über die Schneidkante des Stanzmessers vorstehen und somit den Bezug erfassen, bevor das Stanzmesser in den Bezug eindringt.

Weitere Einzelheiten, Merkmale und Vorteile der vorliegenden Erfindung ergeben sich aus der nachfolgenden Beschreibung unter Bezugnahme auf die beigefügten Zeichnungen. Diese stellen beispielhaft vorteilhafte Ausführungsformen dar, die jedoch keine Einschränkung der vorliegenden Erfindung bedeuten. Diese wird durch die Ansprüche definiert.

Es zeigt:
- Fig. 1: eine perspektivische Ansicht einer Bearbeitungsstation zum Umbiegen des Randes eines Bezugs einer Kopfstützenschale nach erfolgter Umbiegung und Verklebung des Randes mit der Kopfstützenschale;
- Fig. 2: eine Seitenansicht der Bearbeitungsstation von Fig. 1;
- Fig. 3: eine teilgeschnittene Frontansicht der Bearbeitungsstation der Fig. 1;
- Fig. 4: in vergrößertem Maßstab die gestrichelte Einzelheit X, vor dem Umbiegen des Randes des Bezugs;
- Fig. 5: einen Ausschnitt der in Fig. 3 rechten Seite der Bearbeitungsstation in geschnittener Ansicht, mit aufgesetztem Rahmen und teilumgebogenem Randabschnitt;
- Fig. 6: in vergrößertem Maßstab die gestrichelt in Fig. 5 angedeutete Einzelheit Y;
- Fig. 7: die vergleichbare Ansicht wie Fig. 5, jedoch mit zusätzlich eingebrachtem Stempel und vollständig umgebogenem Randabschnitt des Bezugs;
- Fig. 8: in vergrößertem Maßstab die in Fig. 7 gestrichelte Einzelheit Z;
- Fig. 9: eine perspektivische Ansicht einer alternativen Ausführungsform zur Ausführungsform zur Fig. 1, mit einer Einrichtung zum Aufschlitzen des Bezugs im Bereich von zwei Öffnungen für Kopfstützen-Verbindungs- oder Halterungseinrichtungen und einer Einrichtung zum Einbringen einer Öffnung in den Bezug in der Seitenwand der Kopfstützenschale;
- Fig. 10: eine Seitenansicht der Bearbeitungsstation von Fig. 9, die teilweise geschnitten ist und sich im Zustand am Anfang des Schlitzvorgangs befindet;
- Fig.11: in vergrößertem Maßstab die Einzelheit X von Fig. 10;
- Fig. 12: eine ähnliche Ansicht der Bearbeitungsstation von Fig. 10, im Stadium des Beendens der Randumbiegung und vor Beginn des Schlitzens der Öffnungen für die Kopfstützenhalterung;
- Fig. 13: in vergrößertem Maßstab die Einzelheit X von Fig. 12;
- Fig. 14: eine teilweise geschnittene Seitenansicht der Bearbeitungsstation von Fig. 9, jedoch in der Position der eingebrachten Schlitze in die Kopfstützenhalterungsöffnungen;
- Fig. 15: in vergrößertem Maßstab die Einzelheit X von Fig. 14;
- Fig. 16: in Seitenansicht das Schlitzwerkzeug zum Einbringen der Schlitze in die Kopfstützenhalterungsöffnungen;
- Fig. 17: die Draufsicht auf das Schlitzwerkzeug (doppelte Y-Form) von Fig. 16;
- Fig. 18: eine perspektivische Ansicht einer Bearbeitungsstation zum Umbiegen des geschlitzten Randes in die länglichen Öffnungen der Kopfstützenhalterungsöffnungen, bezeichnet als Lochrandumbugstation;
- Fig. 19: eine Draufsicht auf die Lochrandumbugstation von Fig. 18;
- Fig. 20: eine Schnittansicht gemäß der Linie A - A von Fig. 19 in Ausgangsposition vor dem Umbiegen mit eingefahrenem Pneumatikzylinder;
- Fig. 21: in vergrößertem Maßstab die Einzelheit X von Fig. 20;
- Fig. 22: eine ähnliche Ansicht wie Fig. 20, jedoch mit ausgefahrenem Pneumatikzylinder, also teilumgebogenem Rand der geschlitzten Öffnungen;
- Fig. 23: in vergrößertem Maßstab die Einzelheit X von Fig. 22;
- Fig. 24: eine ähnliche Ansicht wie Fig. 22, jedoch mit aufgesetzter Gegenhaltereinrichtung;
- Fig. 25: in vergrößertem Maßstab die Einzelheit X von Fig. 24;
- Fig. 26: eine Draufsicht auf den unteren Abschnitt der Bearbeitungsstation von Fig. 9 mit Schneideinrichtung der seitlichen Öffnung der Kopfstützenschale;
- Fig. 27: eine Schnittansicht entlang der Linie A - A von Fig. 26;
- Fig. 28a: eine Vergrößerung der Einzelheit X von Fig. 27 in das Stanzmesser vor Eingriff in den Bezug steht;
- Fig. 28b: eine vergrößerte Darstellung ähnlich wie Fig. 28a, jedoch mit dem Stanzmesser nach Durchdringen des Bezugs;
- Fig. 29: eine Schnittansicht einer Bearbeitungsstation zum Schlitzen und Umbiegen des Bezugs von kreisförmigen Öffnungen in der Kopfstützenschale mit Andrück- und Verklebeeinrichtung, ebenfalls als Lochrandumbugstation bezeichnet;
- Fig. 30: in vergrößertem Maßstab die Einzelheit X von Fig. 29;
- Fig. 31: eine Schnittansicht ähnlich zu jener in Fig. 29, jedoch mit ausgefahrenem Pneumatikzylinder und damit durchgestoßenem Schlitzwerkzeug;
- Fig. 32: in vergrößertem Maßstab die Einzelheit X von Fig. 31;
- Fig. 33: eine ähnliche Schnittansicht wie Fig. 31, jedoch mit aufgebrachtem hülsenförmigem Gegendruckwerkzeug zum Umbiegen des geschlitzten Randes der Kopfstützen-Halterungsöffnungen;
- Fig. 34: in vergrößertem Maßstab die Einzelheit X von Fig. 33;
- Fig. 35: in vergrößertem Maßstab das mit sechs Messern versehene Schlitzwerkzeug in Seitenansicht; und
- Fig. 36: das Schlitzwerkzeug von Fig. 35 in Draufsicht.

In den Figuren sind gleiche Elemente und Baugruppen mit gleichen Bezugsziffern bezeichnet.

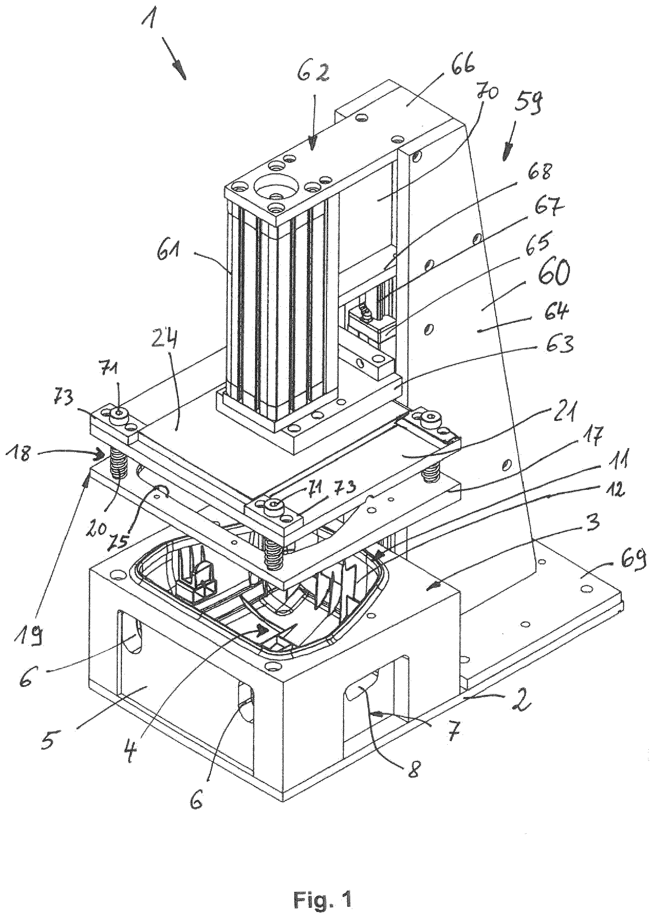

Es wird nunmehr Bezug genommen auf Fig. 1, in der eine Ausführungsform einer Bearbeitungsstation 1 zum Umbiegen des Randes des Bezugs einer Kopfstützenschale 11 in perspektivischer Ansicht dargestellt ist. Die Kopfstützenschale 11 ist in einer Aufnahmeeinrichtung 3 in Form eines Blocks aufgenommen, der einen Hohlraum aufweist, der der Außenkontur der Kopfstützenschale 11 angepasst ist.

In der Darstellung gemäß Fig. 1 hat der Umbugvorgang bereits stattgefunden. Um dies praktisch in einem Arbeitsvorgang zu bewerkstelligen, weist die Bearbeitungsstation 1 folgende Elemente auf. Neben der Aufnahmeeinrichtung 3, die auf einer Grundplatte 2 angeordnet ist, ist auf einer Stützplatte 69 eine Lager- und Führungseinrichtung 59 angeordnet, die eine Lager- und Führungsstütze 60 in Form einer im Wesentlichen vertikalen Säule 64 umfasst, die an ihrem oberen Ende einen Lagerarm 62 aufweist, der eine Antriebseinrichtung 61 für eine Stempeleinrichtung 19 lagert. Die Antriebseinrichtung 61 ist im dargestellten Beispielsfalle ein Pneumatikzylinder, der an einer oberen horizontalen Lagerplatte 66 gelagert bzw. aufgehängt ist. Als weitere Stütze für die Antriebseinrichtung 61 dienen eine untere horizontale Lagerplatte 68 und eine vertikale Verbindungsplatte 70.

Die Antriebseinrichtung 61 ist mit einer Lagerplatte 63 verbunden, die ihrerseits einen Führungswagen 65 aufweist, der in eine Führungsschiene 67 an der Säule 64 der Antriebseinrichtung 60 ist eine Führungsschiene 67 in vertikaler Richtung angeordnet, die mit dem Führungswagen 65 zusammenwirkt und diesen in vertikaler Richtung führt.

Die an der Lagerplatte 63 angehängte Stempeleinrichtung weist folgende Elemente auf. Ein Rahmen 17 ist elastisch mittels Bolzen 18 und Schraubenfeder 20, die jeweils ein gefedertes Führungselement an allen vier Ecken des rechteckförmigen Rahmens 17 bilden, ist beweglich an einer plattenförmigen Aufnahme 21 der Stempeleinrichtung 19 angebracht. Die Lagerung der Bolzen 18 erfolgt mittels Stützplatten 73, die auf der plattenförmigen Aufnahme 21 beispielsweise mittels Schrauben befestigt sind, wobei das obere Ende der Bolzen 18 einen Kopf 71 aufweist, der größer ist als der Durchmesser des Bolzens 18. Die Bolzen 18 können in Durchgangsbohrungen der Stützplatten gleiten.

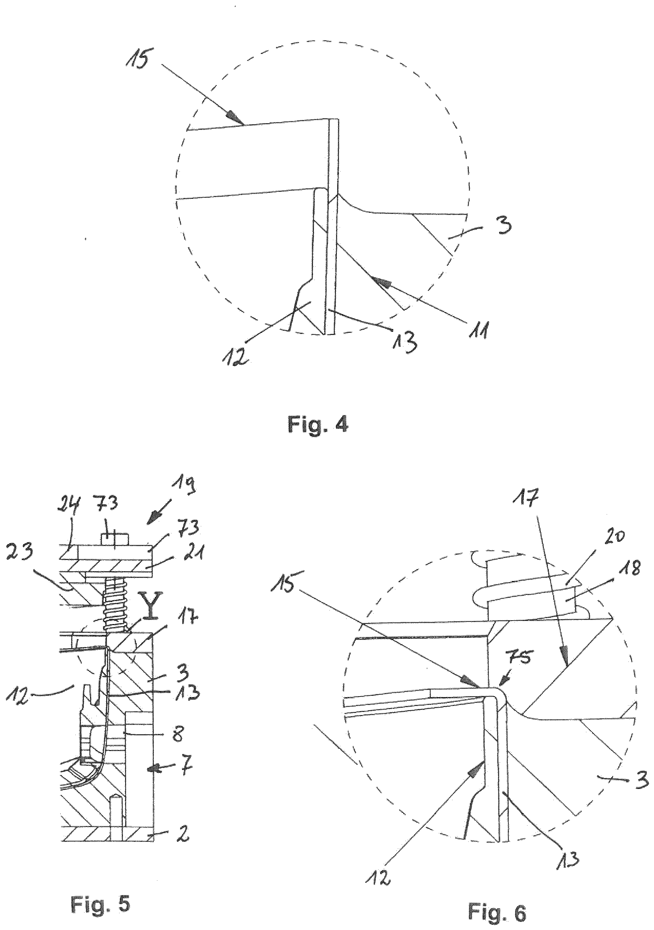

Der Rahmen 17 weist eine Innenkontur 75 auf, die weiter unten näher beschrieben wird. Sie dient zum ersten Umbiegen eines überstehenden Randabschnitts 15 (Fig. 4) des Bezugs.

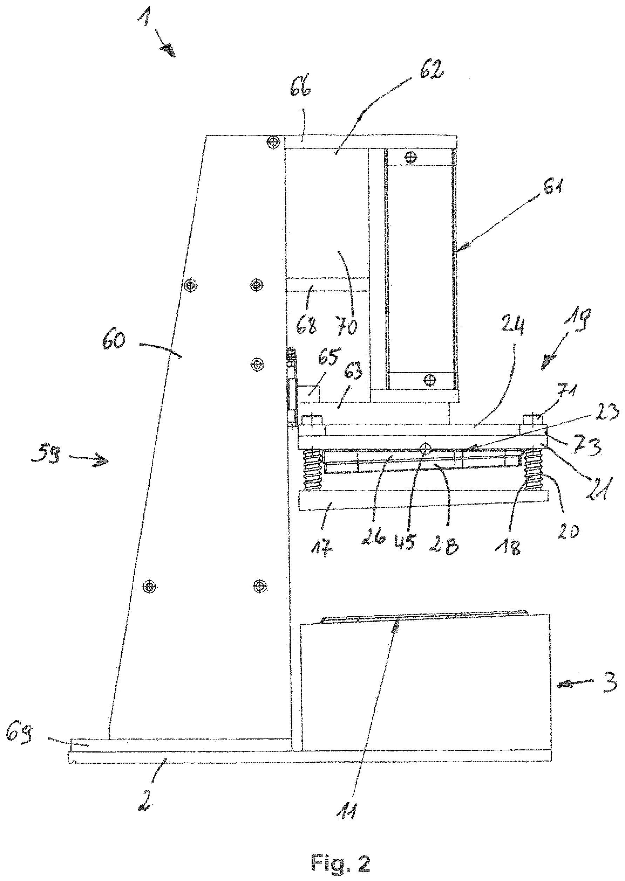

Oberhalb der plattenförmigen Aufnahme 21 ist eine Wärmedämmplatte 24 angeordnet, die dazu dient, dass die Wärme, die elektrisch mittels einer stabförmigen Heizeinrichtung 45, genannt auch Heizpatrone, zwischen der Platte 21 und dem Stempel 23 (s. Fig. 2) erzeugt wird, nicht in die Antriebsvorrichtung 61 weitergeleitet wird.

Die Antriebseinrichtung 61 befindet sich gemäß Fig. 1 in ihrer Ausgangs- bzw. Endposition oberhalb der Aufnahmeeinrichtung 3. Die Antriebseinrichtung 61 ist als Pneumatikzylinder ausgebildet, der eine Kolbenstange mit einem Gewinde aufweist, an der die Lagerplatte 63 verschraubt angeordnet ist, und durch entsprechende pneumatische Betätigung kann die Stempeleinrichtung 19 auf die Aufnahmeeinrichtung 3 abgesenkt und wieder angehoben werden.

Wie weiterhin aus Fig. 1 ersichtlich, weist die Aufnahmeeinrichtung 3 weitere Elemente in zwei ihrer Seitenwände auf. An der Frontseite ist ein gegenüber der Außenfläche nach innen versetztes Öffnungsfeld 5 vorgesehen, in dem zwei längliche Öffnungen 6 ausgebildet sind. Diese länglichen Öffnungen 6 liegen Öffnungen der Kopfstützenschale 11 gegenüber, die ihrerseits für die Aufnahme von Kopfstützen-Verbindungs- bzw. Halterungseinrichtungen dienen. Wie bekannt, werden Kopfstützen beispielsweise mittels zweier längsverschieblicher Stangen im zugehörigen Sitz gelagert.

Auf der einen Seite der Aufnahmeeinrichtung 3 befindet sich ein Öffnungsfeld 7, das ebenfalls von der Außenseite nach innen versetzt angeordnet ist, mit einer Öffnung 8, die einer seitlichen Öffnung der Kopfstützenschale 11 gegenüber liegt, wobei dies weiter unten näher beschrieben wird.

Es wird nunmehr Bezug genommen auf Fig. 2, die eine Seitenansicht der Bearbeitungsstation 1 von Fig. 1 zeigt. Die Kopfstützenschale 11, die sich in der Aufnahmeeinrichtung 3 befindet, weist den fertigen Umbug auf, d. h. die Stempeleinrichtung 19 befindet sich, wie in Fig. 1, in ihrer Ruhe- oder Endposition.

In Fig. 2 ist deutlich der Stempel 23 ersichtlich, der eine gestufte Außenkontur aufweist. Benachbart zur plattenförmigen Aufnahme 21 befindet sich eine querschnittsgrößere Stufe 26 des Stempels 23, worunter sich eine querschnittskleinere Stufe 28 anschließt. Zwischen den beiden Stufen befindet sich eine gekrümmte Fläche, die an die Umbiegekontur der Kopfstützenschale 11 angepasst ist.

Die Aufnahmeeinrichtung 3 ist an die Kopfstützenschale 11 angepasst und deren Oberseite bzw. der Rand der Kopfstützenschale 11 verringert sich in der Höhe von der Vorderseite zur Führungsstütze 60 der Lager- und Führungseinrichtung 59. Die Unterseite des Stempels weist ebenfalls diese Neigung auf, so dass die beiden Ebenen der Unterseite des Stempels 23 und des oberen Randes der Kopfstützenschale 11 parallel zueinander verlaufen bzw. im Laufe des Eingriffs de Stempels auch kurzzeitig in einer gemeinsamen Ebene zu liegen kommen.

Wie aus Fig. 2 ersichtlich befindet sich die Heizpatrone 45 zwischen in einer Öffnung, die halbseitig in der plattenförmigen Aufnahme 21 und halbseitig in dem Stempel 23 ausgebildet ist. Selbstverständlich kann die Heizeinrichtung auch anders ausgebildet sein, beispielsweise als flächige Zwischenlage.

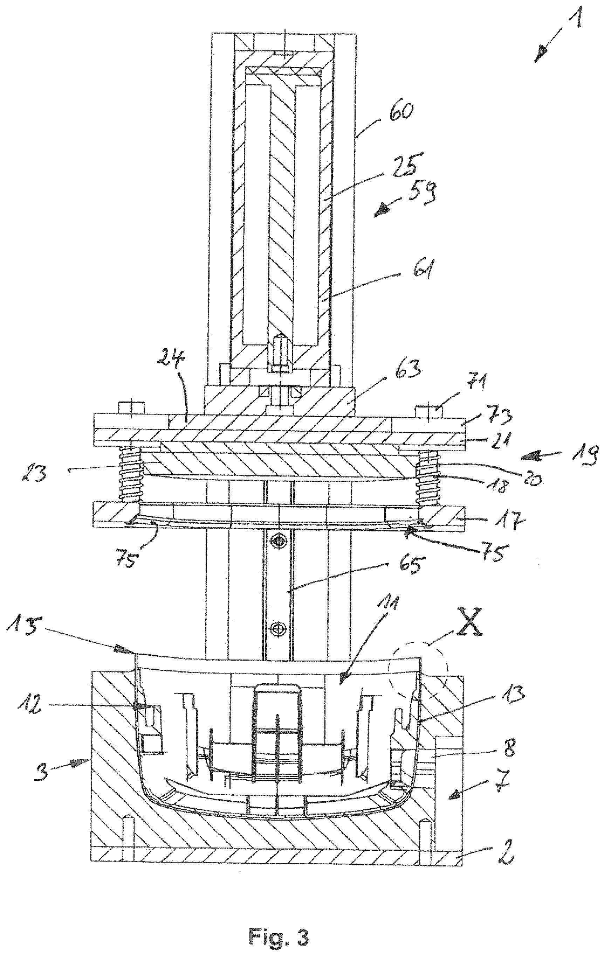

In Fig. 3 ist in Teilschnittansicht und von vorne die erfindungsgemäße Bearbeitungsstation 1 dargestellt. In der Darstellung nach Fig. 3 ist die Kopfstützenschale 11 in ihrer Ausgangssituation dargestellt, also nach dem Vorgang des Beziehens der Kopfstützenschale mit dem Bezug 13 außerhalb dieser Bearbeitungsstation in einem ersten Verfahrensschritt. Ziel ist es, einen umgebogenen Abschlussrand der Kopfstützenschale des (Leder-)Bezugs 13 zu erreichen, was ausgangs zunächst dadurch bewerkstelligt wird, dass ein den Rand der Grundschale 12 der Kopfstützenschale 11 überstehender Randabschnitt 15 durch entsprechenden Zuschnitt des Bezugs 13 erzeugt wird. Dieser soll nunmehr in der Bearbeitungsstation 1 umgebogen werden.

Auf die einzelnen Innenelemente (Rippen, Stege, etc.) der Grundschale 12, welche in der Regel aus einem Kunststoffmaterial gebildet ist, wird im Rahmen dieser Erfindung nicht näher eingegangen.

Die in Fig. 3 gezeigte Einzelheit X ist Gegenstand der Fig. 4. Wie ersichtlich, steht der Randabschnitt 15 deutlich, beispielsweise 8 bis 10 mm, über den oberen Rand der Grundschale 12 über und muss nachfolgend entsprechend sauber umgebogen und dauerhaft mit der Innenseite der Grundschale 12 verbunden werden.

Vor Beginn des Umbiegevorgangs wird die Innenseite des Randabschnitts 15 mit einem thermoaktiven Klebstoff versehen, wobei dies bereits mit der Vorbereitung zum Anbringen des Bezugs auf der Grundschale erfolgen kann oder nachträglich für den Umbiegevorgang separat.

In Fig. 5 wird ausschnittsweise die Bearbeitungsstation 1 im Schnitt ähnlich zur Darstellung gemäß Fig. 3 dargestellt. Wie aus Fig. 5 ersichtlich, wurde die Stempeleinrichtung 19 so weit abgesetzt, dass sich der Rahmen 17 auf der Aufnahmeeinrichtung 3 abgesenkt hat. Wie aus Fig. 6 besser ersichtlich, der die Einzelheit Y von Fig. 5 darstellt, wurde der Randabschnitt 15 des Bezugs 13 durch den Rahmen 17 um annähernd 90° nach innen umgebogen, was durch eine entsprechende Innenkontur 75 des Rahmens bewerkstelligt wird. Diese Innenkontur 75 verjüngt sich von der Unterseite des Rahmens 17 nach innen in einer bogenförmigen Krümmung und passt sich damit der umgebogenen Außenkontur des Randabschnitts 15 an.

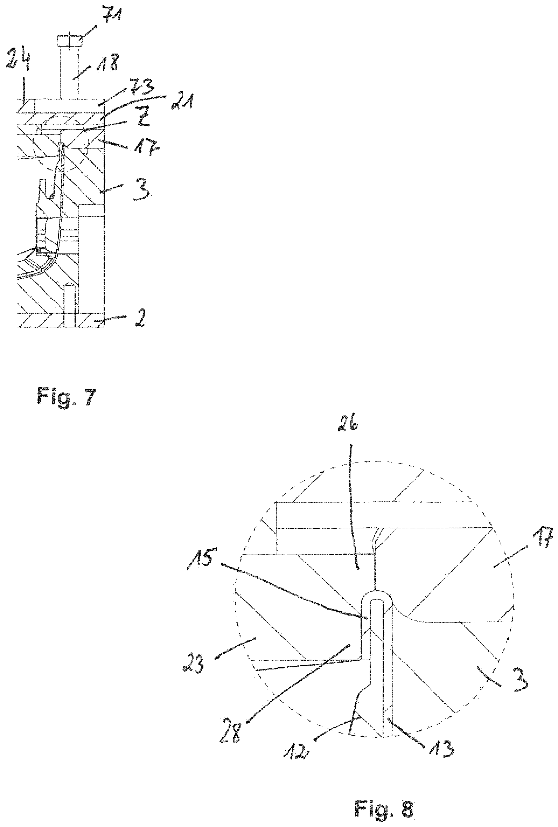

Fig. 7 zeigt dann im Ausschnitt der Bearbeitungsstation 1 das Endstadium des Herstellungsprozesses des Umbiegens des Randabschnitts 15 in dem der Randabschnitt mit der Innenseite der Grundschale 12 verbunden ist. Hat in Fig. 5 der Stempel 23 noch den ursprünglichen Abstand vom Rahmen 17, so ist dieser Abstand in der Position von Fig. 7 auf ein Minimum verkürzt. Dies ist insbesondere dadurch ersichtlich, dass der Bolzen 18 über die Oberseite seiner Stützplatte 73 nach oben vorsteht. Die zusammengedrückte Feder 20 ist nicht dargestellt.

In Fig. 8 ist die Einzelheit Z von Fig. 7 in vergrößertem Maßstab dargestellt. Hieraus wird klar, dass zur Anpassung an die Kontur des umgebogenen Randabschnitts 15 der Stempel 23 in seinem oberen Bereich einer querschnittsvergrößerte Stufe 26 und in seinem unteren Bereich eine querschnittsverkleinerte Stufe 28 aufweisen muss, wobei insbesondere durch die querschnittsverkleinerte Stufe 28 ein entsprechender Seitendruck auf den Randabschnitt 15 erfolgen muss, um den zwischen Grundschale 12 und Innenseite des Randabschnitts 15 aufgebrachten Klebstoff (nicht näher dargestellt) zu aktivieren und zu einer dauerhaften Verbindung von Grundschale 12 und Bezug 13 zu veranlassen. Derartig verwendete Klebstoffe reagieren insbesondere bei bzw. auf Wärme, sodass mittels der Heizpatrone 45 der Stempel 23 entsprechend aufgeheizt werden kann, um diesen gewünschten Wärmeeintrag zu liefern.

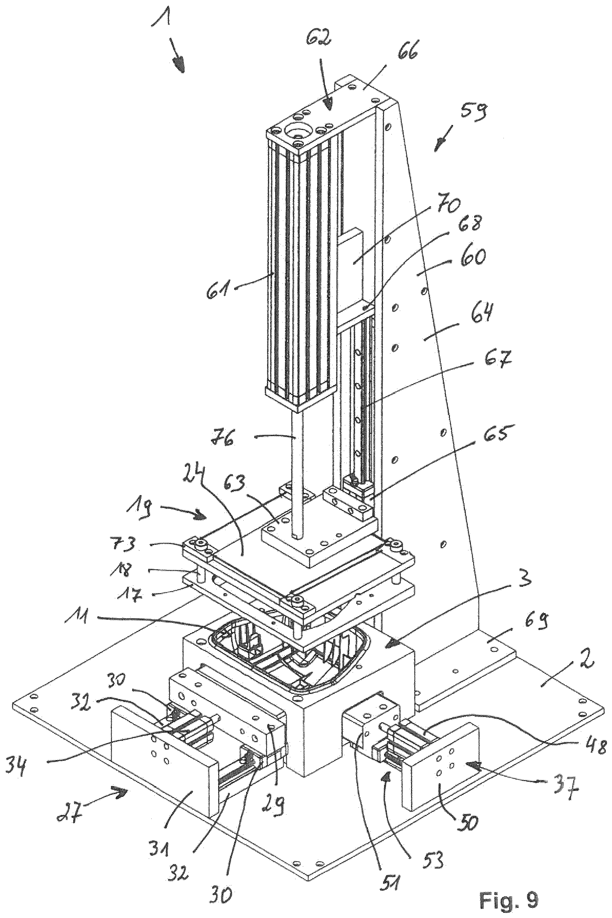

Es wird nunmehr Bezug genommen auf Fig. 9, in der eine leicht abgewandelte bzw. ergänzte Arbeitsstation 1 in perspektivischer Ansicht dargestellt ist. Im Unterschied zur Ausführungsform von Fig. 1 ist die Lager- und Führungseinrichtung 59 größer ausgebildet, dergestalt, dass die Säule 64 länger ist und die Antriebseinrichtung 61 einen größeren Bewegungsweg der Stempeleinrichtung 19 durchführen können muss.

In Fig. 1 ist die Aufnahmeeinrichtung 3 ohne die beiden Zusatzeinrichtungen zum Einbringen von Öfnnungen in den Bezug dargestellt. Diese befinden sich in Fig. 9 auf einer entsprechend vergrößerten Grundplatte 2. Von der Frontseite der Bearbeitungsstation 1 wirkt eine Schlitzeinrichtung 27 auf die - in der Einbausituation der Kopfstütze - Unterseite von dieser ein. Die Schlitzeinrichtung 27 dient zum Einbringen von Schlitzen in den Bezug 13 der Kopfstützenschale 11, wobei die entstehenden Randabschnitte des Bezug 13 an der Öffnung der Kopfstützenschale 11 in einer weiteren Lochrandumbugstation 9 umgebogen werden, die weiter unten näher beschrieben wird.

Die Schlitzeinrichtung 27 weist einen Halteblock 31 zur Lagerung eines Pneumatikzylinders 34 auf, der zum Antrieb einer Schlitzwerkzeugaufnahme 29 dient, an der die Schlitzwerkzeuge angebracht sind. Die Hin- und Herbewegung der Schlitzwerkzeugaufnahme 29 erfolgt mittels gleitender Bewegung auf Führungsschienen bzw. Gleitschienen 32, auf denen Führungswagen 30 gleiten, auf denen die Schlitzwerkzeugaufnahme 29 gelagert ist.

In der Darstellung von Fig. 9 befindet sich die Schlitzwerkzeugaufnahme 29 und damit das Schlitzwerkzeug in der Endposition des Schlitzeingriffs in den Bezug.

Auf der Seite der Aufnahmeeinrichtung 3 befindet sich weiterhin eine Schneideinrichtung 37 zum Ausschneiden des Bezugs und Bilden einer Öffnung im Bezug auf der Seite der Kopfstützenschale 11.

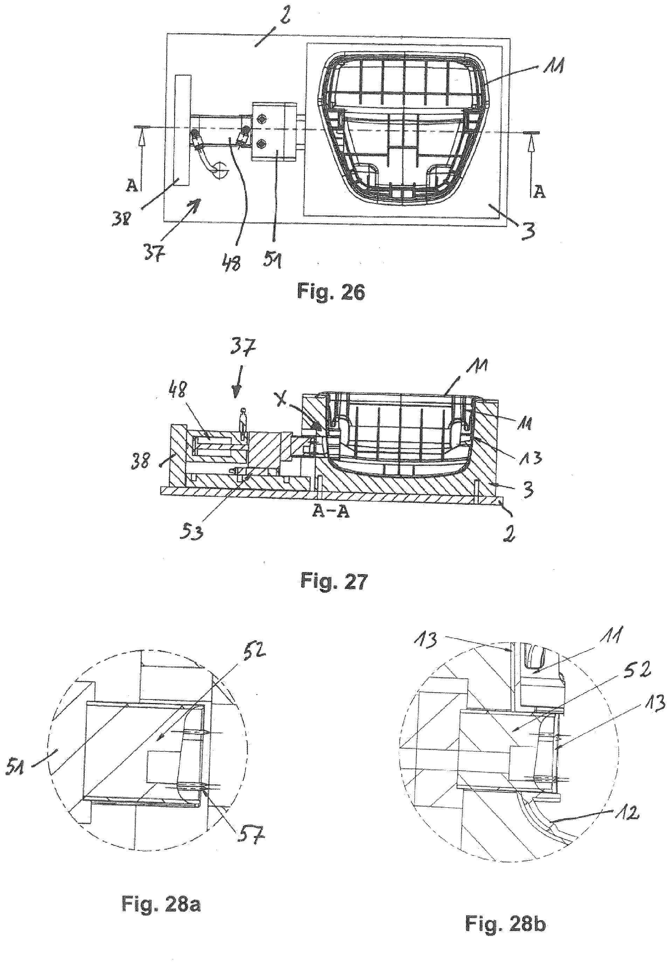

Ähnlich aufgebaut wie die Schlitzeinrichtung 27, weist die Schneideinrichtung 37 ebenfalls einen Pneumatikzylinder 48 auf, und ist eine Schlittenführung 53 vorgesehen, auf der eine Messeraufnahme 51 gleitbeweglich angeordnet ist, die ihrerseits ein Stanzmesser trägt. Der Pneumatikzylinder 48 ist mittels einer Lagerplatte gelagert. Die Schneideinrichtung 37 wird weiter unten unter Bezugnahme auf die Fig. 26 bis 28b weiter beschrieben.

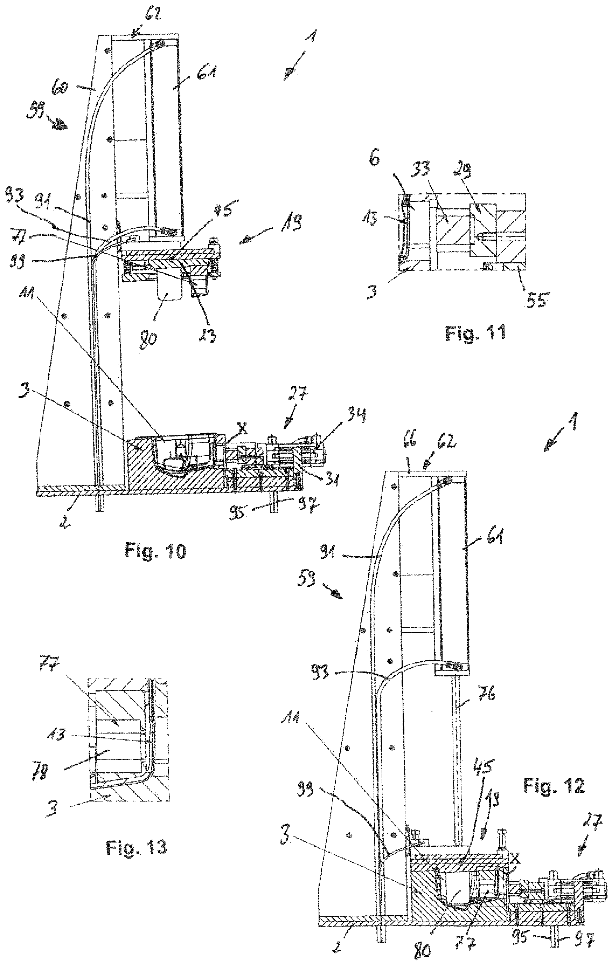

Es wird nunmehr Bezug genommen auf die Fig. 10 bis 17, mittels denen der komplexe Vorgang sowohl des Umbiegens des Randabschnitts 15 als auch insbesondere des Einbringens der Schlitze in die länglichen Öffnungen der Kopfstützenschale 11 dargestellt ist.

Mit großem Vorteil ist es gemäß dem erfindungsgemäßen Verfahren und der erfindungsgemäßen Vorrichtung möglich, in einem dreistufigen aufeinanderfolgenden Arbeitsprozess sowohl den Randabschnitt 15 umzubiegen als auch die Schlitze für die Kopfstützenträger und die Öffnung im Bezug für die seitliche Öffnung 14 der Kopfstützenschale zu erzeugen.

Wie aus Fig. 10 ersichtlich, wird die Antriebseinrichtung 61, in Form eines Pneumatikzylinders angetrieben wozu pneumatische Anschlussleitungen 91 und 93 vorgesehen sind. Das Aufheizen des Stempels 23 erfolgt durch die elektrisch aufheizbare Heizpatrone 45, wofür eine Anschlussleitung 99 vorgesehen ist. An der Stempeleinrichtung 19 ist zusätzlich ein Gegenhalter 77 für die Schlitzeinrichtung 23 angeordnet, dessen Funktion nachfolgend beschrieben wird. Weiterhin ist ein Gegenlager 80 für die Schneideinrichtung 37 vorgesehen, das ebenfalls weiter unten beschrieben wird.

Die Funktion des Gegenhalters 77 für die Schlitzeinrichtung 23 ist derart, dass der flexible Bezug, der beim Eindringen des Schlitzwerkzeugs ausweichen will und ggf. ein Aufschlitzen dadurch verhindert, an einem elastischen Auslenken gehindert wird.

In Fig. 11 ist in vergrößertem Maßstab die Einzelheit X von Fig. 10 dargestellt. In der Schlitzwerkzeugaufnahme 29 ist ein Schlitzwerkzeug 33 aufgenommen und, wie in Fig. 11 dargestellt, befindet sich die Schlitzwerkzeugaufnahme 29 auf einer Schlittenführung 55. In der Ausgangssituation gemäß den Fig. 10 und 11 befindet sich das Schlitzwerkzeug 33 noch außerhalb der Öffnung 6 in der Aufnahme 3.

In Fig. 12 ist der Gegenhalter 77 in seine Betriebsposition eingefahren. Dies lässt sich noch besser aus Fig. 13 ersehen, die die vergrößerte Darstellung der Einzelheit X ist. Der Gegenhalter 77 weist eine Innenöffnung 78 auf, die die entsprechende Form des Schlitzwerkzeugs 33 aufweist.

In den Fig. 16 und 17 ist das Schlitzwerkzeug 33 dargestellt, das eine doppelte Y-Form aufweist. Es ist, wie aus diesen Figuren ersichtlich und bereits angegeben, auf der Schlitzwerkzeugaufnahme 29 verankert, die ihrerseits plattenförmig ausgebildet ist. Entsprechend der doppelten Y-Form des Schlitzwerkzeugs 33 weist dann die Innenöffnung 78 des Gegenhalters 77 ebenfalls eine doppelte Y-Form auf, wobei deren Querschnitt so gestaltet ist, dass er das Schlitzwerkzeug 33 nicht behindert. Der ansonsten blockartig ausgebildete Gegenhalter 77 ist in der Lage, den Bezug 13 außerhalb der Schlitzkontur gemäß Innenöffnung 78 an einem ein Auslenken zu behindern bzw. dem entgegenzuwirken.

In den Fig. 14 und 15, wobei Fig. 15 die Einzelheit X von Fig. 14 zeigt, ist die Endposition der Schlitzeinrichtung 27 dargestellt, das Schlitzwerkzeug 33 hat also den Bezug durchstoßen und ist dabei in die Öffnung 78 des Gegenhalters 77 eingedrungen. Außerhalb der Öffnung 78 hat der Gegenhalter 77 den Bezug 13 an einem Auslenken gehindert.

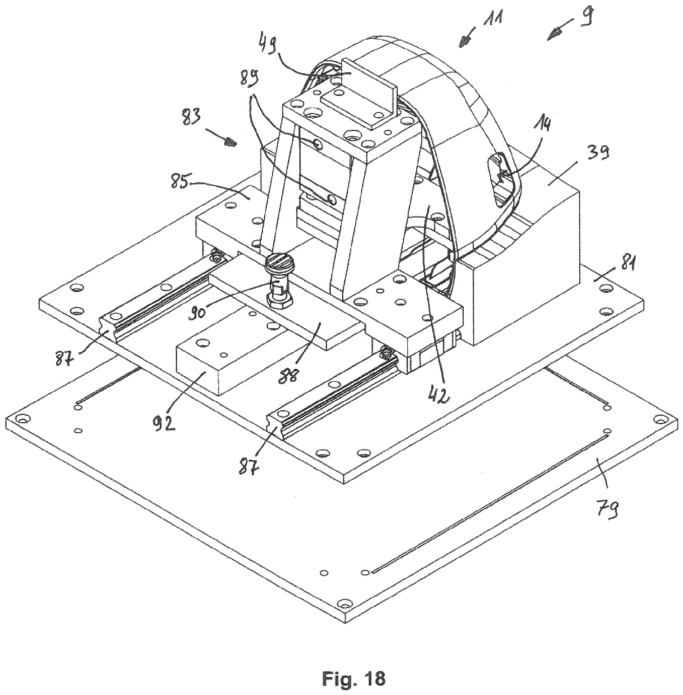

Es wird nunmehr Bezug genommen auf Fig. 18, in der in perspektivischer Ansicht eine Lochrandumbugstation 9, bevorzugt für Langlöcher dargestellt ist. Die Darstellung gemäß Fig. 18 zeigt die Bearbeitungsposition, in der die Kopfstützenschale 11 nach Bearbeitung in der Bearbeitungsstation 1 in einer Schalenaufnahme 39 aufgenommen ist. Die Lochrandumbugstation 9 umfasst eine Grundplatte 79, deren Funktion weiter unten erläutert wird und eine Trägerplatte 81 für die Schalenaufnahme 39. Weiterhin befindet sich auf der Trägerplatte 81 eine Antriebseinrichtung 83, wobei die Antriebseinrichtung 83 einen Antriebsschlitten 85 umfasst, der längsbeweglich auf Gleitschienen 87 gelagert ist. Die Antriebseinrichtung 83 weist einen pneumatischen Antrieb auf, der über entsprechende pneumatische Anschlussleitungen (nicht dargestellt) über Anschlüsse 89 verbunden ist. Die Antriebseinrichtung 83 dient zum Antrieb bzw. zum Bewegen der Gegenhaltereinrichtung 42 mit dem Gegenhalteelement 43.

Zum Einführen der Kopfstützenschale 11 in ihre Bearbeitungsposition in der Schalenaufnahme 39, wird die Kopfstützenschale 11 vor die Schalenaufnahme 39 gesetzt und in ihre Bearbeitungsposition geschoben, wobei ein Anschlag 49 vorgesehen ist, um die Kopfstützenschale 11 in ihrer Betriebsposition zu halten.

Nebenbei wird darauf hingewiesen, dass in Fig. 18 die seitliche Öffnung 14 der Kopfstützenschale 11 mit dem ausgestanzten Bezug deutlich ersichtlich ist.

Um die Kopfstützenschale 11 in ihrer Bearbeitungsposition festzulegen, ist ein Arretierbolzen 90 vorgesehen, der seine Arretierung in einem Verriegelungsblock 92 findet. Gelagert ist der Arretierbolzen 90 auf einer Bolzenträgerplatte 88.

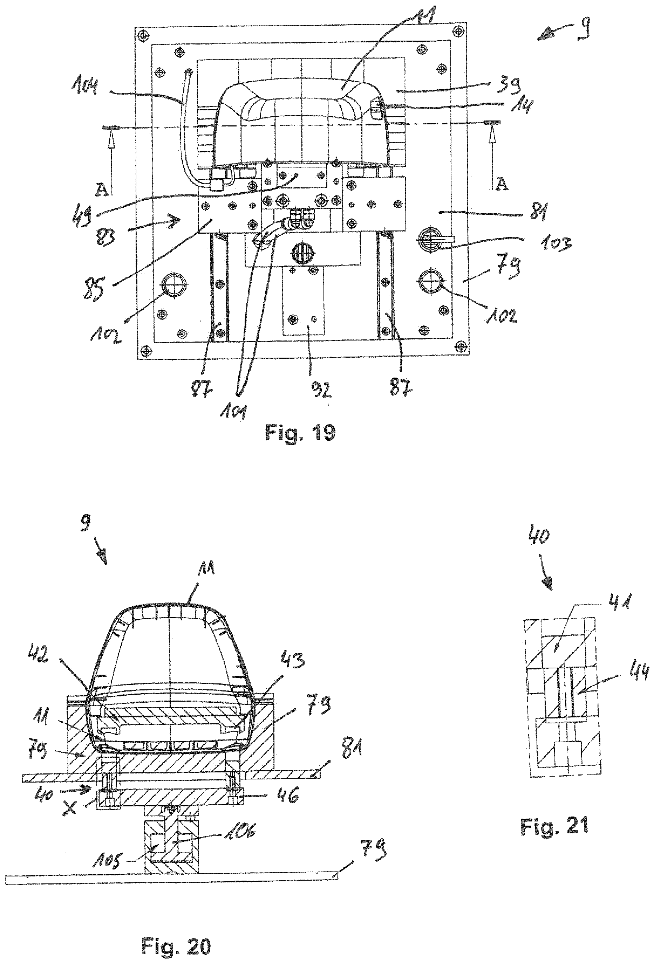

In Fig. 19 ist eine Draufsicht auf die Lochrandumbugstation 9 dargestellt, wobei weitere Elemente dargestellt sind. In der Draufsicht sieht man pneumatische Anschlussleitungen 101, mit der die Antriebseinrichtung 83 mit der Druckluftversorgung verbunden ist, sowie eine elektrische Leitung, mit der Strom zu einer nachfolgend beschriebenen Heizeinrichtung zuführbar ist.

Weiterhin sind Druckknöpfe 102 einer Zweihandsteuerung und ein Drehschalter 103 vorgesehen. Die Antriebsvorrichtung 83 dient, wie oben bereits angegeben zum Antrieb der Gegenhaltereinrichtung 42 sowie zum Antrieb von Umbiegewerkzeugen 40 (vgl. Fig. 20). Dabei erfolgt der Antrieb derart, dass sowohl die Umbiegewerkzeuge 40 als auch die Gegenhaltereinrichtung 42 gleichzeitig in Bewegung versetzt werden, die Bewegung der Gegenhaltereinrichtung 42 gegenüber der Bewegung der Umbiegewerkzeuge 40 jedoch etwas verlangsamt stattfindet, so dass die Umbiegewerkzeuge 40 den Öffnungsrand des Bezugs zuerst aufbiegen bevor die Gegenhaltereinrichtung 42 den Öffnungsrand gegen die Innenseite des Lochrands der Grundschale 12 drückt und verklebt.

Mit dem Dreh- oder Wahlschalter 103 wird die Antriebsrichtung der Umbiegewerkzeuge 40 und der Gegenhaltereinrichtung 42 eingestellt. Um die Bedienungsperson aus Sicherheitsgründen daran zu hindern, während des Betriebs in die Vorrichtung bzw. Station zu langen, muss diese zum Betrieb der Antriebsvorrichtung 83 beide Druckknöpfe 102 gleichzeitig drücken.

Die Fig. 20 zeigt eine Schnittansicht entlang der Linie A - A von Fig. 19. Aus Fig. 20 ist auch ersichtlich, welche Elemente sich unter der Trägerplatte 81 befinden. Die Lochrandumbugstation 9 weist zum Umbiegen der Ränder des geschlitzten Bezugs 13 zwei Umbiegewerkzeuge 40 auf, die, wie aus Fig. 21 besser ersichtlich, die eine Vergrößerung der Einzelheit X von Fig. 20 darstellt, gebildet sind aus einem Stempel 41 aus elastischem Material sowie einer Stempelaufnahme 44. Die Außenkontur der Stempel 41 ist der Kontur der Öffnung in der Kopftstützenschale 11 angepasst. Die Umbiegewerkzeuge 40 sind auf einer Stempellagerplatte 46 gelagert, die ihrerseits auf einem Kolben 106 einer Antriebseinrichtung gebildet aus einem Pneumatikzylinder 105 angeordnet ist. In Fig. 20 befindet sich der Kolben 106 in der eingefahrenen Position, also in einer Ruheposition der Umbiegewerkzeuge 40.

Wie weiterhin aus Fig. 20 ersichtlich, weist die Gegenhaltereinrichtung 42 hülsenförmige Gegenhalteelemente 43 entsprechend den beiden Öffnungen in der Kopfstützenschale 11 auf.

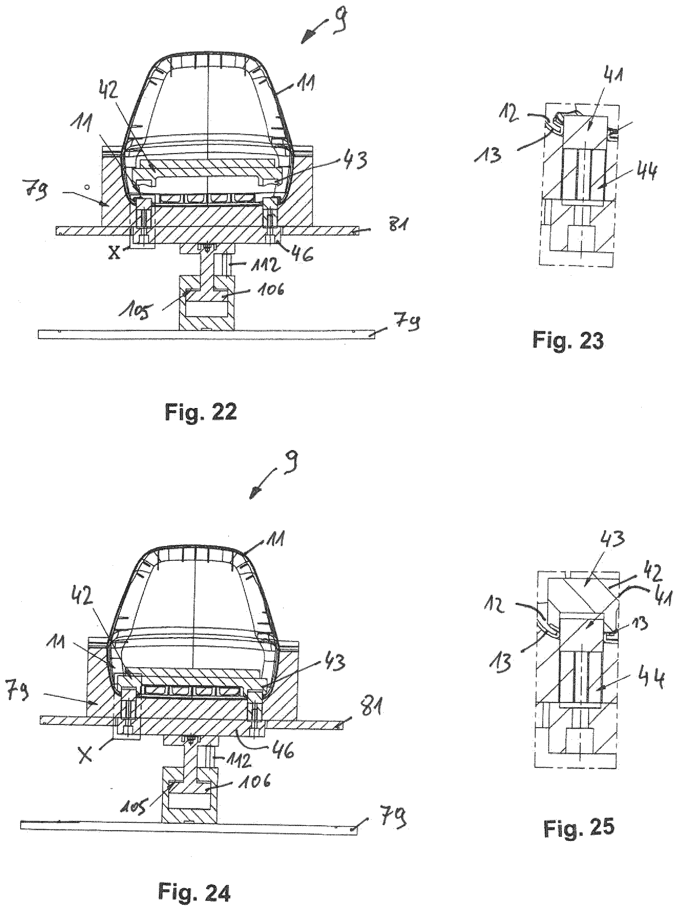

In den Fig. 22 bis 25 ist der Umbiegevorgang der geschlitzten Ränder des Bezugs im Bereich der Öffnungen der Kopfstützenschale 11 dargestellt.

Wie aus Fig. 22 ersichtlich, befindet sich der Kolben 106 im Pneumatikzylinder 105 in seiner aufgefahrenen Position, d.h. die Umbiegewerkzeuge 40 sind durch Anheben der Stempellagerplatte 46 in die Öffnungen der Kopftstützenschale 11 eingefahren und haben, wie besser aus Fig. 23 ersichtlich, den Bezug zumindest teilweise auf- und umgebogen. Dieses Umbiegen ergibt sich durch die Eigenspannung des Bezugs 13.

Zur Stabilisierung der Bewegung und als Verdrehschutz des Kolbens 106 des Pneumatikzylinders 105 (beispielsweise Pneumatikzylinder der Fa. Festo Typ ADNGF) sind zwei Führungsstangen 112 vorgesehen, welche parallel derart angeordnet sind, dass in der Darstellung gemäß Fig. 22, der vordere den hinteren verdeckt. Wie aus Fig. 22 weiterhin ersichtlich, befindet sich die Gegenhaltereinrichtung weiterhin in ihrer Ruheposition.

Demgegenüber ist die Gegenhaltereinrichtung 42 mit ihren hülsenförmigen Gegenhalteelementen 43 abgesenkt und, wie besser aus Fig. 25 ersichtlich, hat die Ränder des Bezugs auf die Innenseite der Grundschale 12 gedrückt. Die Gegenhaltereinrichtung 42 ist mittels einer Heizpatrone beheizt, so dass auch die Kontaktflächen der hülsenförmigen Gegenhalteelemente 43 entsprechend erwärmt sind und zur Aktivierung des Klebstoffs bei ihrem Andrücken in der Lage sind.

Mit der Lochrandumbugstation 9 wird somit eine hervorragende und automatische Verarbeitung des geschlitzten Bezugs im Bereich der Kopfstützenschalenöffnungen für die Halterungselemente der Kopfstütze auf dem jeweiligen Sitz geschaffen.

Es wird nunmehr Bezug genommen auf die Fig. 26, 27, 28a und 28b.

Die Fig. 26 zeigt in Draufsicht die Aufnahmeeinrichtung 3 der Kopfstützenschale 11 mit der pneumatisch betriebenen Schneideinrichtung 37 zum Erzeugen einer Öffnung im Bezug für die Seitenöffnung 14 der Kopfstützenschale 11. An der Lagerplatte 38 ist der mittels pneumatischen Anschlussleitungen versorgte Pneumatikzylinder 48 angebracht, der mit einer Messeraufnahme 51 zusammenwirkt, die ein Stanzmesser 52 trägt. Die Fig. 27 stellt die Schnittansicht entlang der Linie A - A von Fig. 26 dar. Wie aus Fig. 27 ersichtlich, befindet sich der Pneumatikzylinder 48 in der eingefahrenen Position, d. h. das Stanzmesser 52, das besser aus Fig. 28a ersichtlich ist, befindet sich in Außereingriffsposition mit dem Bezug 13.

Wie aus Fig. 28a weiter ersichtlich, ist eine Mehrzahl von Fixierdornen 57 vorgesehen. Diese Dorne, die sich innerhalb des Stanzmessers 52 befinden, das im Wesentlichen eine Au-ßenkontur entsprechend der Öffnung 14 aufweist, dienen zum Fixieren des Bezugs während des Durchtrennens von diesem. Die Fixierdorne 57 sollen ein Ausweichen des Bezugs während des Einbringens des Stanzwerkzeugs 52 verhindern.

In Fig. 28b ist dann der Zustand der eingebrachten Öffnung im Bezug 13 dargestellt. Deutlich sichtbar ist, dass die Fixierdorne 57 den ausgeschnittenen Lederabschnitt zusammen mit dem Stanzmesser 52 vom Bezug der Kopfstützenschale 11 entfernt und mitgenommen haben. Nicht dargestellt ist in dieser Figur der Gegenhalter 80.

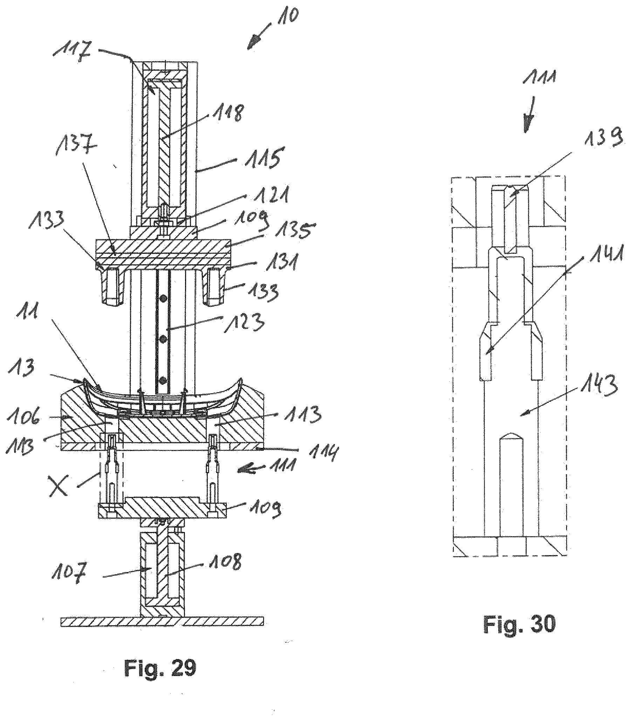

Es wird Bezug genommen auf die Fig. 29 bis 36, in denen eine Lochrandumbugstation 10, besonders geeignet für kreisförmige Löcher oder Öffnungen in der Kopfstützenschale 11 dargestellt ist, deren Rand umgebogen werden soll. Insbesondere sind auch die speziell angepassten Werkzeuge dargestellt.

Wie aus Fig. 29 ersichtlich weist die Lochrandumbugstation 10 eine Lager- und Führungssäule 115 auf, an der eine Antriebseinrichtung 117 bevorzugt in Form eines Pneumatikzylinders ausgebildet ist, die einen Kolben 118 aufweist, zur Bewegung einer Gegendruckwerkzeugaufnahme 131 mit hülsenförmigen Gegendruckwerkzeugen 133 für jeden umzubiegenden Bezug. An dem Kolben 108 ist eine Werkzeugträgerplatte 109 angeordnet, die über einen Führungswagen 121 gleitbeweglich an einer Führungsschiene 123 angeordnet ist. Die Werkzeugträgerplatte 109 hält eine weitere Trägerplatte 135, an der die Gegendruckwerkzeugaufnahme 131 befestigt ist. In der Trägerplatte 135 befindet sich eine elektrisch betriebene stabförmige Heizeinrichtung benannt als "Heizpatrone" 137, die dazu dient, die hülsenförmigen Gegendruckwerkzeuge 133 zu erwärmen.

Die Kopfstützenschale 11 ist in einer Aufnahme 106 aufgenommen, die auf einer Stützplatte 114 ruht.

In Fig. 29 befindet sich die Lochrandumbugstation 10 in einer Ausgangsstellung, in der die hülsenförmigen Gegendruckwerkzeuge 133 sowie eine Antriebseinrichtung in Form eines Pneumatikzylinders 107 sich in Ruhestellung befinden. Ein Kolben des Pneumatikzylinders 107 befindet sich im eingefahrenen Zustand. Er lagert eine Werkzeugträgerplatte 109, auf der sich entsprechend den Öffnungen in der Kopfstützenschale 11 zwei Schneid- und Umbugwerkzeuge 111 befinden. Diese ragen jeweils in eine Durchgangsbohrung 113 in der Aufnahme 106 hinein. Die Einzelheit X in Fig. 29 ist vergrößert in Fig. 30 dargestellt.

Wie aus Fig. 30 deutlich hervorgeht, befindet sich am oberen Ende einer Werkzeugaufnahme 143 ein Schneidmesserwerkzeug 139. Dieses Schneidmesserwerkzeug 139 ist auf die Werkzeugaufnahme 143 aufgesetzt. Unterhalb des Schneidmesserwerkzeugs 139 befindet sich ein elastisches Formstück 141, dessen Außendurchmesser über den Außendurchmesser des Schneidmesserwerkzeugs 139 hervorspringt.

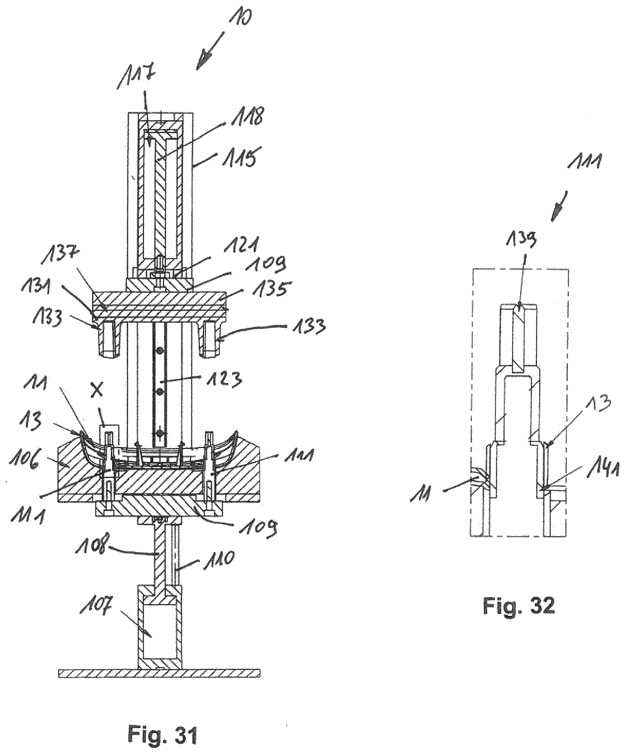

In Fig. 31 ist die Position dargestellt, in der die Werkzeuge 111 den Bezug 13 im Bereich der Öffnungen der Kopfstützenschale 11 bereits durchstoßen haben. Entsprechend befindet sich der Kolben mit der Kolbenstange 108 in der ausgefahrenen Anschlagposition. Wie bei dem oben beschriebenen Pneumatikzylinder 105 sind zur Führung und Verdrehsicherung der Kolbenstange 108 Führungsstangen 110 vorgesehen, von denen die vordere die hintere verdeckt.

Bei dem Schneid- und Umbugwerkzeug 111 handelt es sich um ein Werkzeug, das eine Doppelfunktion erfüllt. Mithilfe des Schneidmesserwerkzeugs 139 wird der Bezug 13 durchstoßen und durch Weiterbewegung des Schneid- und Umbugwerkzeugs 111 mittels des elastischen Formstücks 141 der geschlitzte Bezug aufgebogen, wie dies deutlich aus Fig. 32 hervorgeht. Die Funktion des elastischen Formstücks 141 entspricht der Funktion des aus elastischem Material gebildeten Stempels 41.

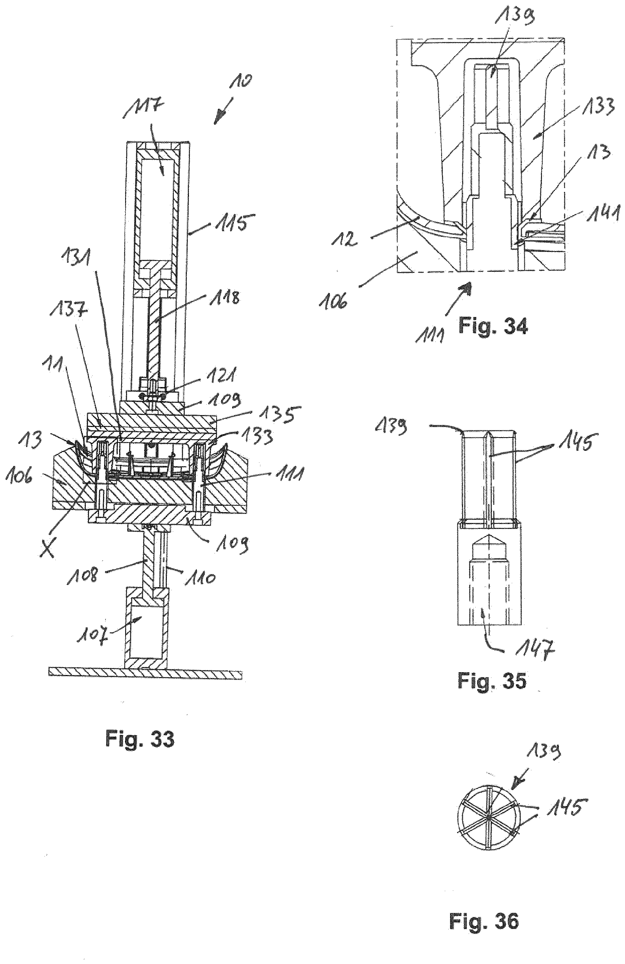

Anschließend, wie aus Fig. 33 und 34 hervorgeht, wird durch Absenken der hülsenförmigen Gegendruckwerkzeuge 133 über die vorstehenden Schneid- und Umbugwerkzeuge 111 bis auf die Grundschale 12 der Lochrand des Bezugs umgebogen, und, weil die hülsenförmigen Gegendruckwerkzeuge 133 erwärmt sind, kann eine Aktivierung des Klebstoffs erfolgen, sodass die Ränder der geschlitzten Öffnung des Bezugs 13 fest mit der Innenseite der Grundschale verbunden, nämlich verklebt werden können.

In Fig. 35 ist in Seitenansicht und in Fig. 36 in Draufsicht das Schneidmesserwerkzeug 139 dargestellt. Es weist sechs am Umfang gleichmäßig verteilte Schneidmesser 145 auf, die auf einer Schneidmesseraufnahme 147 gelagert sind.

Mit der vorliegenden Erfindung wird somit ein Herstellungsverfahren und eine Vorrichtung zur Durchführung dieses Herstellungsverfahrens geschaffen, bei dem in reproduzierbarer qualitätsvoller und schneller Weise das Umbiegen des Randabschnitts eines Bezugs einer Kopfstützenschale erreicht wird und auch die in der Schale vorgesehenen Öffnungen entweder mit dem umgebogenen Rand des Bezugs sauber hergestellt werden können bzw. für zusätzliche Einrichtungen in der Öffnung der Kopfstützenschale ein sauberes Ausschneiden des zu entfernenden Bezugabschnitts ermöglicht wird. Dies erfolgt im Wesentlichen automatisch, sodass eine ungleiche Verarbeitung mit Qualitätsschwankungen durch manuelle Bearbeitung vermieden wird.

Die vorliegende erfindungsgemäße Vorrichtung umfasst somit mehrere Einzelvorrichtungen bzw. -stationen, nämlich
- eine Basisstation 1 zum Umbiegen des Randes des Bezugs über den offenen Rand der Kopfstützenschale,
- eine Vorrichtung 27 zum Einbringen von Schlitzen in die Öffnungen für die Verbindungseinrichtungen mit dem Fahrzeugsitz,
- eine Vorrichtung 9 bzw. 10 zum Umbiegen der durch die Schlitze entstehenden Ränder im Bereich der Öffnungen in zwei Ausführungsformen, einmal für Langlöcher und einmal für kreisrunde Löcher bzw. Öffnungen, sowie
- eine Stanzeinrichtung 37 zum Entfernen des Bezugs im Bereich von Öffnungen, welche mit Zusatzeinrichtungen besetzt werden.

Die vorliegende Erfindung umfasst somit Vorrichtungen bzw. Stationen, die einen Gesamtkomplex an Vorrichtungen zur Herstellung eines Halbfertigzeugs in Form einer Kopfstützenschale bilden, die ausgehend vollständig mit einem Bezug bezogen wurde. Dabei umfasst sie Kopfstützenschalen, die ohne Öffnungen ausgebildet sind. Bei deren Herstellung fallen somit die Schritte des nachträglichen Einbringens von Öffnungen bzw. Schlitzen in den Bezug weg und somit auch die dafür vorgesehenen (Teil-)Vorrichtungen.

### Bezugszeichenliste

1 - Bearbeitungsstation
2 - Grundplatte
3 - Aufnahmeeinrichtung
4 - Hohlraum
5 Öffnungenfeld
6 - Öffnungen
7 - Öffnungenfeld
8 - Öffnung
9 - Lochrandumbugstation für Langlöcher
10 - Lochrandumbugstation für kreisförmige Löcher
11 - Kopfstützenschale
12 - Grundschale
13 - Bezug
14 - Seitenöffnung
15 - Randabschnitt
17 - Rahmen
18 - Bolzen
19 - Stempeleinrichtung
20 - Schraubenfeder
21 - plattenförmige Aufnahme
23 - Stempel
24 - Wärmedämmplatte
25 - Antriebszylinder
26 - querschnittsgrößere Stufe
27 - Schlitzeinrichtung
28 - querschnittskleinere Stufe
29 - Schlitzwerkzeugaufnahme
30 - Führungswagen
31 - Halteblock
32 - Führungsschiene
33 - Schlitzwerkzeug
34 - Pneumatikzylinder
35 - Öffnung
37 - Schneideinrichtung
38 - Lagerplatte
39 - Schalenaufnahme
40 - Umbiegewerkzeug
41 - Stempel aus elastischem Material
42 - Gegenhaltereinrichtung
43 - hülsenförmiges Gegenhalteelement
44 - Stempelaufnahme
45 - stabförmige Heizeinrichtung - Heizpatrone
46 - Stempellagerplatte
47 - Antriebseinrichtung
48 - Pneumatikzylinder
49 - Anschlag
50 - Lagerplatte
51 - Messeraufnahme
52 - Stanzmesser
53 - Schlittenführung
55 - Schlittenführung
57 - Fixierdorn
59 - Lager- und Führungseinrichtung
60 - Lager- und Führungsstütze
61 - Antriebseinrichtung
62 - Lagerarm
63 - Lagerplatte
64 - Säule
65 - Führungswagen
66 - obere horizontale Lagerplatte
67 - Führungsschiene
68 - untere horizontale Lagerplatte
69 - Stützplatte
70 - vertikale Verbindungsplatte
71 - Köpfe der Bolzen
73 - Stützplatte
75 - Innenkontur des Rahmens
77 - Gegenhalter
78 - Innenöffnung
79 - Grundplatte
81 - Trägerplatte für Schalenaufnahme 80 - Gegenhalter
83 - Antriebseinrichtung
85 - Antriebsschlitten
87 - Gleitschienen
89 - Anschlüsse für pneumatische Leitungen
90 - Arretierbolzen
91 - pneumatische Anschlussleitung
92 - Verriegelungsblock für Arretierbolzen
93 - pneumatische Anschlussleitung
95 - pneumatische Anschlussleitung
97 - pneumatische Anschlussleitung
99 - elektrische Anschlussleitung für Heizeinrichtung
101 - pneumatische Anschlussleitungen
102 - Zweihandsteuerung
103 - Drehschalter
104 - elektrische Leitung
105 - Pneumatikzylinder
106 - Aufnahme für Kopfstützenschale
107 - Pneumatikzylinder
108 - Kolben
109 - Werkzeugträgerplatte
110 - Führungsstange
111 - Schneid- und Umbugwerkzeug
112 - Bolzen
113 - Durchgangsbohrung
114 - Stützplatte
115 - Lager- und Führungssäule
117 - Antriebseinrichtung/Pneumatikzylinder
118 - Kolben
119 - Lagerplatte
121 - Führungswagen
123 - Führungsschiene
131 - Gegendruckwerkzeugaufnahme
133 - hülsenförmiges Gegendruckwerkzeug
135 - Trägerplatte
137 - stabförmige Heizeinrichtung - Heizpatrone
139 - Schneidmesserwerkzeug
141 - elastisches Formstück
143 - Werkzeugaufnahme
145 - Schneidmesser
147 - Schneidmesseraufnahme

## Patentansprüche

1. Verfahren zur Herstellung einer lederbezogenen Kopfstützenschale (11), welche aus einer Grundschale (12) gebildet wird, die einen Hohlraum mit einem umlaufenden Rand aufweist und die Grundschale (12) mit einem flächigen Bezug (13) aus Leder oder lederähnlichem Material bezogen wird, mit den folgenden Schritten:
- Verkleben des Bezugs (13) mit der Grundschale (12), dessen Zuschnitt derartig ausgebildet wird, dass er den Rand der Grundschale (12) um einen bestimmten Betrag übersteigt,
- Einlegen der Grundschale (12) mit Bezug (13) in eine Aufnahmeeinrichtung (3) einer Bearbeitungsstation (1),
- Aufdrücken einer Stempeleinrichtung (19) auf die Grundschale (12) mit Bezug (13), wobei die Stempeleinrichtung (19) einen Rahmen (17) mit einer innen umlaufenden gekrümmten Kontur (75) aufweist, wodurch bei Aufsetzen des Rahmens (17) auf den überstehenden Randabschnitt (15) des Bezugs dieser nach dem Inneren der Grundschale (12) gedrückt und umgebogen wird,
- anschließend durch Weiterbewegen der Stempeleinrichtung (19) Aufsetzen eines Stempels (23) auf den teils umgebogenen Randabschnitt (15) des Bezugs (13), wobei der Stempel (23) eine Außenkontur (26, 28) aufweist, die der Innenkontur des Randbereichs des Hohlraums der Grundschale (12) folgt, wobei der Stempel beheizbar ist, und Einfahren des Stempels (23) in den Hohlraum der Grundschale (12) unter vollständigem Umbiegen des Randabschnitts des Bezugs (13) in den Hohlraum und Andrücken des Randabschnitts gegen die Innenfläche des Randes der Grundschale (12), wodurch der Randabschnitt (15) mit der Innenseite des Randes der Grundschale (12) verklebt wird.

2. Verfahren nach Anspruch 1, **dadurch gekennzeichnet, dass** der Bezug (13) im Bereich einer wenigstens einen Öffnung in der Grundschale (12), welche für die Aufnahme einer Kopfstützen-Verbindungs- oder Halterungseinrichtung der Kopfstützenschale (11) mit dem dazugehörigen Fahrzeugsitz dient, aufgeschlitzt wird.

3. Verfahren nach Anspruch 2, **dadurch gekennzeichnet, dass** nach Einsetzen der bezogenen Grundschale (12) in eine weitere Bearbeitungssation (9) zum Umbiegen des Randes der geschlitzten Öffnung, die Grundschale (12) fixiert wird und folgende Schritte durchgeführt werden:
- Einführen eines Stempels (41) in die wenigstens eine Öffnung in der Grundschale (12) unter gleichzeitigem Umbiegen der Randbereiche des geschlitzten Bezugsbereichs in das Innere der Grundschale,
- Aufsetzen eines an das der Kontur des Stempels (41) angepasstes hülsenförmiges Gegenhalteelement (41) und Andrücken des Gegenhalteelements (43) gegen die Innenseite der Grundschale (12), wodurch der Rand der aufgeschlitzten Öffnung des Bezugs mit der Innenseite des Randbereichs der wenigstens einen Öffnung der Grundschale (12) verklebt wird.

4. Verfahren nach Anspruch 2, **dadurch gekennzeichnet, dass** nach Einsetzen der bezogenen Grundschale (12) in eine weitere Bearbeitungsstation (10) zum Erzeugen einer Öffnung mit einem umgebogenen Rand des Bezug, die Grundschale (12) fixiert wird und folgende Schritte durchgeführt werden:
- Schlitzen des Bezugs (13) im Bereich der betreffenden Öffnung in der Grundschale (12) mittels eines Schneid- und Umbugwerkzeugs (111),
- weiteres Einführen des Schneid- und Umbugwerkzeugs (111) in die wenigstens eine Öffnung unter gleichzeitigem Aufbiegen der Randbereiche des geschlitzten Bezugsbereichs,
- Aufsetzen eines hülsenförmigen Gegendruckwerkzeuges (133) auf den aufgebogenen Rand des Bezugs (13) und Andrücken des Randes an die Innenseite des Grundschale 12, wodurch der Rand mit der Innenseite des Randbereichs der betreffenden Öffnung der Grundschale (12) verklebt wird.

5. Verfahren nach Anspruch 3 oder 4, **dadurch gekennzeichnet, dass** das hülsenförmige Gegenhalteelement (43) oder das hülsenförmige Gegendruckwerkzeug (133) beheizt wird.

6. Verfahren nach einem der Ansprüche 2 bis 5, **dadurch gekennzeichnet, dass** zum Aufschlitzen des Bezugs (13) in der wenigstens einen Öffnung für die Kopfstützen-Verbindungs- oder Halterungseinrichtung ein Schlitz- oder Messerwerkzeug (33) verwendet wird, das einen Querschnitt in Form eines doppelten Y oder das Schneid- und Umbugwerkzeug verwendet wird, das eine Mehrzahl von Schneidklingen (145) aufweist, die radial bzw. sternförmig um eine Mittenachse angeordnet sind, wobei ein Gegenhalter (77) vorgesehen ist, in den das Schlitz- oder Messerwerkzeug (33) beim Schlitzvorgang eintaucht.

7. Verfahren nach einem der Ansprüche 1 bis 6, **dadurch gekennzeichnet, dass** die beweglichen Elemente der Bearbeitungsstationen pneumatisch angetrieben werden.

8. Vorrichtung zum zumindest teilweisen Herstellen einer lederbezogenen Kopfstützenschale (11), welche aus einer Grundschale (12) gebildet wird, die einen Hohlraum und einen umlaufenden Rand aufweist, umfassend das Umbiegen eines Randabschnitts (15) des Bezugs der Kopfstützenschale (11), welche aufweist:
- eine Bearbeitungsstation (1) zum Umbiegen des Randabschnitts (15) des Bezugs (13) der Kopfstützenschale (11) mit einer hohlen Aufnahmeeinrichtung (3) zur Aufnahme der Grundschale (12), welche zumindest teilweise mit dem zu beziehenden Material verklebt ist,
- eine Lager- und Führungseinrichtung (59), an der eine Stempeleinrichtung (19) längsbeweglich angeordnet ist, mit einer plattenförmigen Aufnahme (21), an der ein Stempel (23) befestigt und ein Rahmen (17) elastisch beweglich angehängt sind, wobei der Stempel (23) eine zu dem Rahmen passende Au-ßenkontur aufweist und bevorzugt beheizbar ist.

9. Vorrichtung nach Anspruch 8, **dadurch gekennzeichnet, dass** der Rahmen (17) eine Innenkontur (75) aufweist, die gekrümmt ist und sich in Richtung Aufnahme (21) verjüngt.

10. Vorrichtung nach Anspruch 8 oder 9, **dadurch gekennzeichnet, dass** der Antrieb der Stempeleinrichtung (19) pneumatisch erfolgt.

11. Vorrichtung nach einem der Ansprüche 8 bis 10, **dadurch gekennzeichnet, dass** sie eine Schlitzeinrichtung (27, 139) zum Aufschlitzen wenigstens einer Öffnung im Bezug der Grundschale (12) aufweist zur Bildung einer Öffnung für wenigstens eine Kopfstützen-Verbindungs- oder Halteeinrichtung.

12. Vorrichtung nach Anspruch 11, **dadurch gekennzeichnet, dass** die Schlitzeinrichtung (27) ein Schlitzwerkzeug (33) mit einem Querschnitt mit doppelter Y-Form aufweist oder als Schneidmesserwerkzeug (139) mit sternförmig angeordneten Schneidklingen (145) ausgebildet ist.

13. Vorrichtung nach Anspruch 11 oder 12, **dadurch gekennzeichnet, dass** eine Gegenhaltereinrichtung (77) vorgesehen ist, die vorzugsweise an der Stempeleinrichtung (19) angebracht ist und in den Bereich des mittels der Schlitzeinrichtung (33) einzubringenden Schlitzes einbringbar ist und beim Schlitzvorgang ein Ausweichen des elastischen Bezugsmaterials verhindert, wobei die Gegenhaltereinrichtung (77) eine Öffnung aufweist, die der Kontur des Schlitzwerkzeugs (33) entspricht, sodass beim Durchdringen des Schlitzwerkzeugs (33) durch den Bezug, dieses in die Gegenhaltereinrichtung (77) eindringen kann.

14. Vorrichtung nach einem der Ansprüche 1 bis 13, **dadurch gekennzeichnet, dass** sie eine Schneideinrichtung (37) zum Einbringen wenigstens einer Öffnung in den Bezug (13) im Bereich einer Öffnung in einer Seitenwand der Grundschale (12) durch eine entsprechende Öffnung (8) der Aufnahmeeinrichtung (3) der Lochrandumbug-Bearbeitungsstation (1) aufweist, wobei die Schneideinrichtung (37) ein hülsenförmiges Stanzmesser (52) aufweist, in dessen Hohlraum eine Mehrzahl von Fixierdornen (57) angeordnet ist, die zur Fixierung des elastischen Bezugs (13) während des Schneidvorgangs dienen, wobei sich die Fixierdornen (57) zusammen mit dem Stanzmesser (52) bewegen.

15. Vorrichtung nach Anspruch 14, **dadurch gekennzeichnet, dass** die Fixierdorne (57) über die Schneidkante des Stanzmessers (52) vorstehen und somit den Bezug erfassen, bevor das Stanzmesser (52) in den Bezug (13) eindringt.
